# EUROPEAN PATENT APPLICATION

(11) **EP 4 556 444 A1**
(43) Date of publication of application: **21.05.2025**
(21) Application number: 23217889.7
(22) Date of filing: 19.12.2023
(51) Int. Cl.: C01G 49/00

(54) **SOLID-STATE ELECTROLYTE, LITHIUM-ION BATTERY, AND ELECTRONIC APPARATUS**

(30) Priority: 14.11.2023 CN 202311518865
(71) Applicant: AESC Japan Ltd., Yokohama-Shi, Kanagawa 220-0012 (JP)
(72) Inventor: YU, Le, Pudong New Area Shanghai, 201315 (CN); WU, Ming, Pudong New Area Shanghai, 201315 (CN)
(74) Representative: Becker, Eberhard

(57) **Abstract**

The disclosure provides a solid-state electrolyte, a lithium-ion battery, and an electronic apparatus, and specifically, relates to the technical field of solid-state batteries. The solid-state electrolyte includes halides represented by formula (1), and at least part of the halides have a median particle diameter D50 of 50 nm to 3 µm, Li₂₊ₐZr₁₋ₐMₐCl_{6-x-y}BrₓI_{y} (1), in formula (1), 0<a≤0.6, 0≤x≤6, 0≤y≤6, x+y≤6, and M is selected from at least one of V, Cr, Mn, Fe, Co, and Ni. The use of the above solid-state electrolyte in the lithium-ion battery is beneficial to transport dynamics of lithium ions. Further, pulverization and cracking of the electrolyte particles during the cycle are avoided, and the electrochemical performance of the battery is improved.

## Description

### BACKGROUND

### Technical Field

The disclosure relates to the technical field of solid-state batteries, and in particular, relates to a solid-state electrolyte, an ion battery, and an electronic apparatus.

### Description of Related Art

In recent years, lithium-ion batteries have developed rapidly due to their advantages such as high energy density, long cycle life, and environmental friendliness, so lithium-ion batteries have been widely used in fields such as electric vehicles, aerospace, and portable devices. However, most of the currently-available lithium-ion batteries use flammable organic liquid-state electrolytes, which bring serious safety issues and temperature operating limitations. Further, at low temperatures, an organic solvent will significantly lower the ionic conductivity of the electrolyte. In order to improve the safety and energy density of lithium-ion batteries, non-flammable inorganic solid-state electrolytes are used to replace liquid-state electrolytes because the inorganic solid-state electrolytes can better adapt to the high-voltage positive electrode, and the battery structure may thus be simplified. Therefore, the development of all-solid-state batteries has become one of the important technical directions for the next generation of batteries.

To promote the development of high-performance all-solid-state batteries, solid-state electrolytes with high ionic conductivity and wide electrochemical windows need to be studied. In addition, in an all-solid-state battery, the solid-solid interface between the electrodes and the solid-state electrolytes is critical to the electrochemical performance. Due to their permeability, organic liquid-state electrolytes allow a good electrode/electrolyte interface to be constructed in lithium-ion batteries. However, in an all-solid-state battery, a solid electrolyte is usually required to be added to the positive electrode as an ionic conductor to enhance the ionic conductivity of the positive electrode. The transport of lithium ions in the positive electrode is highly dependent on the ionic conductivity and particle size of the solid-state electrolyte, which determines the transport dynamics of lithium ions in the positive electrode and the electrode-electrolyte interface. In addition, the ionic conductivity of the electrolyte layer is affected by the particle diameter and grain boundary resistance of the solid-state electrolyte. Further, the particle size and the grain boundary portion of the solid-state electrolyte in the positive electrode determine the interfacial contact area and stability to the active substance, thereby affecting the interface resistance and the transport dynamics of lithium ions. Therefore, adjusting the particle diameter of a solid-state electrolyte is crucial to the electrochemical performance of the positive electrode layer and the electrolyte layer of an all-solid-state battery.

At present, the prepared halide solid-state electrolytes have larger particle sizes. An all-solid-state battery using this type of electrolyte may be easily affected by stress and strain inside the battery during cycling, leading to pulverization and cracking of the electrolyte particles as well as an increased risk of lithium dendrites penetrating the electrolyte layer. Further, the larger electrolyte particles have a smaller specific surface area, which is not conducive to the contact between the positive electrode active substance and the electrolyte in the positive electrode, so the transport dynamics of ions is seriously affected. The capacity, rate performance, and cycle performance of the all-solid-state battery are thereby lowered.

Therefore, a solid-state electrolyte, a lithium-ion battery, and an electronic apparatus are required to be provided to solve the above problems.

### SUMMARY

In view of the abovementioned shortcomings of the related art, the disclosure provides a solid-state electrolyte, a lithium-ion battery, and an electronic apparatus to improve the problem in the transport dynamics of ions as affected by the larger particle size of the particles in the solid-state electrolyte. The invention is defined in the appended claims.

To achieve the above, the first aspect of the disclosure provides a solid-state electrolyte including halides represented by the following formula (1), where at least part of the halides have a median particle diameter D50 of 50 nm to 3 µm,

Li₂₊ₐZr₁₋ₐMₐCl_{6-x-y}BrₓI_{y} (1),

in formula (1), 0<a≤0.6, 0≤x≤6, 0≤y≤6, x+y≤6, and M is selected from at least one of V, Cr, Mn, Fe, Co, and Ni.

In an embodiment of the disclosure, in formula (1), M is Fe.

In an embodiment of the disclosure, in formula (1), D50 is 100 nm to 1 µm.

In an embodiment of the disclosure, D50 is 100 nm to 1 µm.

The second aspect of the disclosure provides a lithium-ion battery, and the lithium-ion battery includes a positive electrode, a negative electrode, and an electrolyte layer. The positive electrode includes a positive electrode active substance and the solid-state electrolyte according to the above.

In an embodiment of the disclosure, the positive electrode active substance includes one or more of lithium nickel cobalt manganese oxide, lithium nickel oxide, lithium manganese oxide, lithium nickel manganese oxide, lithium cobalt oxide, and lithium nickel cobalt aluminum oxide.

In an embodiment of the disclosure, the positive electrode also includes a conductive agent, and a mass content of the conductive agent in the positive electrode is 0.05% to 10%.

In an embodiment of the disclosure, the electrolyte layer includes the halides.

In an embodiment of the disclosure, at least part of the halides in the electrolyte layer have a median particle diameter D50 of 50 nm to 3 µm.

The third aspect of the disclosure further provides an electronic apparatus, and the electronic apparatus includes the abovementioned lithium-ion battery.

The solid-state electrolyte provided by the disclosure is halides. Further, at least part of the halides have a median particle diameter D50 of 50 nm to 3 µm. That is, nanonization treatment of the large-particle-diameter halides is performed to obtain small-particle-diameter halides, so that a specific surface area of the halide particles is increased.

Using halides with a small particle diameter in the positive electrode can increases the contact between the positive electrode active substance and the halides, which is beneficial to the transport of lithium ions. In this way, the interface resistance is reduced, and the battery rate and cycle performance are improved. The use of the halides with a small particle diameter in the electrolyte layer increases the compaction density of the electrolyte layer, so that pulverization and cracking of the electrolyte particles are prevented, and the safety performance of the battery is improved.

### BRIEF DESCRIPTION OF THE DRAWINGS

To make the technical solutions provided in the embodiments of the disclosure or the related art more clearly illustrated, several accompanying drawings required by the embodiments or the related art for description are briefly introduced as follows. Obviously, the drawings in the following description are merely some embodiments of the disclosure, and for a person having ordinary skill in the art, other drawings can be obtained based on these drawings without inventive effort.
FIG. 1 is a flow chart of a method for preparing a solid-state electrolyte according to an embodiment of the disclosure.
FIG. 2 is a schematic structural diagram of a lithium-ion battery according to the disclosure.
FIG. 3 is a schematic structural diagram of the lithium-ion battery in Example 1 according to the disclosure.
FIG. 4 is a schematic structural diagram of the lithium-ion battery in Example 15 according to the disclosure.
FIG. 5 is a schematic structural diagram of the lithium-ion battery in Example 16 according to the disclosure.
FIG. 6 is a schematic structural diagram of the lithium-ion battery in Example 17 according to the disclosure.
FIG. 7 is a schematic structural diagram of the lithium-ion battery in Example 18 according to the disclosure.
FIG. 8 is a schematic structural diagram of the lithium-ion battery in Example 19 according to the disclosure.
FIG. 9 is a schematic structural diagram of the lithium-ion battery in Comparative Example 1 according to the disclosure.

### DESCRIPTION OF THE EMBODIMENTS

Unless otherwise defined, all technical and scientific terms used herein have the same meaning as commonly understood by a person having ordinary skill in the art to which this disclosure belongs. The terms used herein in the specification of the disclosure are for the purpose of describing specific embodiments only, and are not intended to limit the disclosure. As used herein, the term "and/or" includes any and all combinations of one or more of the associated listed items.

Unless otherwise stated or contradictory, terms or phrases used in the specification have the following meanings:

In the specification, references to "a plurality", "plural", "multiple", etc., unless otherwise specified, mean that the quantity is greater than 2 or equal to 2. For instance, "one or more" means one or more than or equal to two.

In the specification, "preferable", "better", and "favorable" are only used to describe embodiments or examples with better effects. It should be understood that they do not limit the scope of the disclosure. If there are multiple "preferences" in a technical solution, each "preference" will be independent unless otherwise specified and there is no contradiction or mutual restriction.

In the specification, "further", "furthermore", "in particular", etc. are used for descriptive purposes and indicate differences in content, but should not be understood as limiting the scope of the disclosure.

In the specification, when it comes to a numerical range, unless otherwise specified, the distribution of optional values within the numerical range is considered continuous and includes the two numerical endpoints of the numerical range (i.e., the minimum value and the maximum value), as well as every value between the two numerical endpoints. When multiple numerical ranges are provided to describe a characteristic or feature, these numerical ranges may be combined.

The disclosure provides a solid-state electrolyte including halides represented by formula (1): Li₂₊ₐZr₁₋ₐMₐCl_{6-x-y}BrₓI_{y} (1),
where 0.1≤a≤0.6, x=0.5, y=0.5 .

In formula (1), M represents a doping element, and is Fe, and a homovalent substitution of Fe³⁺ in a crystal lattice can improve ionic conductivity of an electrolyte. a represents a doping amount of the M element, for example, a can be 0.1, 0.3, or 0.5. x represents the doping amount of the Br element. y represents the doping amount of the I element

Further, at least part of the halides provided by the disclosure are halides having a median particle diameter D50 of 50 nm to 3 µm. Furthermore, D50 is 100nm to 1µm, for example, 100nm, 500nm, 800nm, or 1µm, etc. Herein, halides having a D50 of 50 nm to 3 µm are defined as first halides. As such, the halides provided by the disclosure may all be the first halides, or part of the halides may be the first halides, and the remaining halides are defined as second halides. The median particle diameter of the second halides is greater than 3 µm.

As an electrolyte, a halide features the characteristics of high ionic conductivity and high voltage resistance and has good compatibility with an uncoated oxide positive electrode active substance. Therefore, when the halides provided by the disclosure are used in a battery, not only the ion transport dynamics can be effectively improved, but the space charge effect can also be prevented from occurring. Further, since the halides do not contain rare earth metals, costs can be significantly lowered.

During research, the inventor found that large particles of halides are not conducive to contact with the positive electrode active substance in the positive electrode due to their small specific surface area, so the ion transport dynamics is affected, and the capacity, rate performance, and cycle performance of the lithium-ion battery may thus be lowered. Therefore, in the disclosure, part of the halides are nano-processed into small-particle halides with a median particle diameter D50 of 50 nm to 3 µm. Halides within this particle diameter range can increase the specific surface area of the particles, allowing better contact between the electrolyte particles and the positive electrode active substance, reducing interface resistance, and improving battery rate and cycle performance.

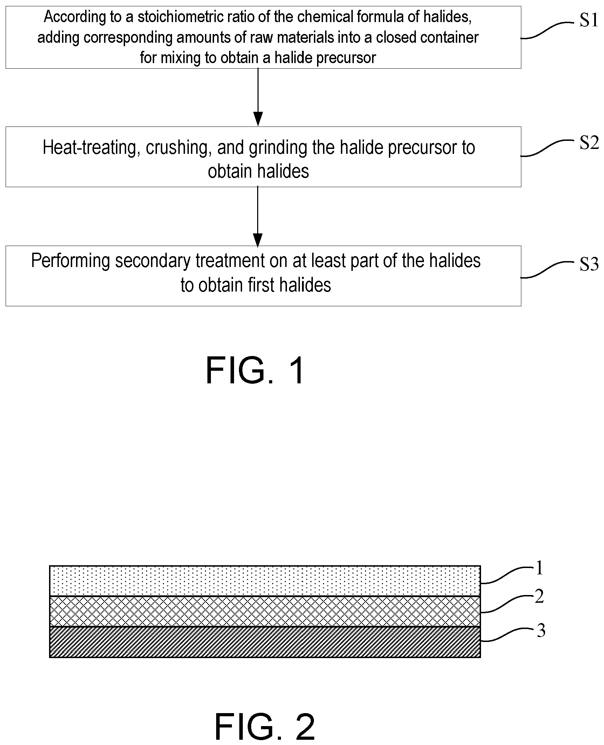

The abovementioned halides may be obtained by referring to conventional preparation methods in the art. As an example, with reference to FIG. 1, the preparation process of the halides includes the following steps:

In S1, according to a stoichiometric ratio of the chemical formula of the halides, corresponding amounts of compound raw materials containing Li, Zr, and M ions are added into a closed container for mixing to obtain a halide precursor.

In S2, the halide precursor is heat treated, crushed, and ground to obtain halides.

In S3, at least part of the halides are subjected to secondary treatment to obtain the first halides.

To be specific, the compounds containing Li, Zr, and M ions in step S1 include LiCl, ZrCl₄, FeCl₃, etc. The mixing method may be a conventional method in the art that can mix the raw materials evenly, such as one or a combination of mechanical stirring, mechanical vibration, ball milling, and roller milling. Preferably, ball milling is used for mixing. A rotation speed of ball milling mixing is 100 rpm to 1000 rpm, mixing time is 0.5 hours to 3 hours, a diameter of ball milled zirconium beads is 5 mm to 20 mm, and a ball-to-material ratio is (20 to 50):1. During the research process, the applicant found that the abovementioned ball milling conditions can make the raw materials of the solid-state electrolyte more uniformly mixed, so the interface compatibility between the positive electrode active substance and the solid-state electrolyte is further improved.

Further preferably, in the step S1, the rotation speed during ball milling mixing is 300 rpm, the ball milling time is 1 hour, the diameter of the ball milled zirconium beads is 10 mm, and the ball-to-material ratio is 30: 1.

The heat treatment in step S2 is solid-phase sintering of the precursor in step S1 in an inert gas atmosphere. Herein, during the solid-phase sintering process, a heating rate is 2 °C/min to 10 °C/min, a sintering temperature is 200 °C to 500 °C, and sintering time is 2 hours to 7 hours. Note that the sintering time is calculated from the time after the temperature rises to a target sintering temperature.

Further preferably, during the solid-phase sintering process, the heating rate is 4 °C/min to 5 °C/min, the sintering temperature is 250 °C to 350 °C, and the sintering time is 3 hours to 5 hours. In the disclosure, through the study of the sintering process, it was found that the crystallinity of the halides may be enhanced by comprehensive control of the abovementioned heating rate, sintering temperature, and sintering time. Further, the intramolecule arrangement is more orderly, so the ionic conductivity of the halide solid-state electrolyte is further improved.

After the sintering is completed, after cooling, the sintered product is taken out, crushed, and ground to obtain the halides. In this disclosure, the cooling method after sintering is not particularly limited. For instance, the halide solid-state electrolyte may be cooled by furnace cooling.

Since the halide electrolyte particles prepared after sintering are large and are not conducive to contact with the positive electrode active substance, step S3 is performed in the disclosure, and at least part of the halides prepared in step S2 are subjected to secondary treatment to obtain halides with small particle diameter that meet the requirements (i.e., the first halides).

The abovementioned secondary treatment method may be one or a combination of ultrasonic dispersion, mechanical vibration, mechanical stirring, ball milling, and roller milling. Preferably, mechanical stirring is employed, that is, the halides prepared in step S2 are dispersed into a solvent, a dispersant is added and stirred until uniformly dispersed, and the first halides are obtained after drying.

The solvent in step S3 may be selected from one or a mixture of toluene, chlorobenzene, xylene, dimethyl carbonate, N-methylformamide, n-hexane, glyme, dibutyl ether, ethanol, 1,2-ethylenediamine, 1,2-ethanedithiol, acetonitrile, tetrahydrofuran, methanol, isopropyl ether, acetone, hexene, ethyl acetate, benzyl acetate, butyl butyrate, and diisobutyl ketone. Preferably, the solvent is xylene.

The dispersant in step S3 may be selected from one or a mixture of cetyltrimethylammonium bromide, cetyltrimethylammonium chloride, cetyltrimethylammonium sulfonate, sodium dodecyl sulfate, sodium dodecyl benzene sulfonate, sodium octyl sulfonate, polyethylene glycol octanol ether, polysorbate, polyoxyethylene stearyl alcohol ether, sodium cocoate, sodium palmitate, sodium oleinate, sodium dodecyl sulfonate, and sodium polyacrylate. Preferably, the dispersant is polyethylene glycol octanol ether.

During the secondary treatment, a mass ratio of halides to solvent is 1:30 to 30:30. Preferably, the mass ratio of halides to solvent is 1:20.

During the secondary treatment, a mass percentage of the dispersant is 0.05% to 5%, and % refers to the mass ratio of the dispersant in the mixed solution of halide solid-state electrolyte and solvent. Preferably, the mass percentage of dispersant is 1%.

The drying method is one or a combination of vacuum filtration, vacuum drying, and blast drying. Preferably, the drying method is vacuum drying.

With reference to FIG. 2, the second aspect of the disclosure provides a lithium-ion battery. The lithium-ion battery includes a positive electrode 1, a negative electrode 3, and an electrolyte layer 2. The electrolyte layer 2 is disposed between the positive electrode 1 and the negative electrode 3 and is used to transport lithium ions between the positive electrode and the negative electrode. Herein, the positive electrode 1 includes a positive electrode active substance and the solid-state electrolyte according to the above. The addition of halides with a small particle diameter in the positive electrode 1 may increase the contact between the positive electrode active substance and the halide electrolyte, which is beneficial to the transport of lithium ions. Further, the halides with a small particle diameter may increase the specific surface area of the electrolyte particles, allowing the electrolyte particles to have better contact with the positive electrode, so that the interface resistance is reduced, and the battery rate and cycle performance are improved.

In some embodiments, the positive electrode active substance includes but not limited to lithium nickel cobalt manganese oxide (NCM), lithium nickel oxide (LNO), lithium manganese oxide (LMO), lithium nickel manganese oxide (LNMO), lithium cobalt oxide (LCO), and lithium nickel cobalt aluminum oxide (NCA). That is, the positive electrode active substance may be any one of the above-listed positive electrode materials, for example, NCM, LNO, or LCO, etc. The positive electrode active substance may also be a combination of any two or more of the above, such as a combination of NCM and LMO or a combination of NCA and LCO, etc. The specific type of the positive electrode active substance may be selected according to actual needs.

The positive electrode 1 includes the positive electrode active substance and the solid-state electrolyte. At least part of the halides in the solid-state electrolyte have a median particle diameter D50 of 50 nm to 3 µm. Therefore, there are two situations for the positive electrode 1: the positive electrode 1 includes the positive electrode active substance and the first halides; or the positive electrode 1 includes the positive electrode active substance, the first halides, and the second halides. Herein, the ratio of the positive electrode active substance to the halides (including the first halides and the second halides) may be set with reference to the ratio of the positive electrode active substance to the solid-state electrolyte in the conventional composite positive electrode. For instance, the mass ratio of the positive electrode active substance to the halides is (50 to 75): (20 to 50).

In some embodiments, the positive electrode 1 further includes a conductive agent, and the conductive agent includes at least one of graphite, graphene, conductive carbon black (super-P), conductive carbon fibers (VGCF), and carbon nanotubes. The conductive agent may be any one or a combination of any two or more listed above. Further, the conductive agent includes one or both of the conductive carbon black and the conductive carbon fibers. Preferably, the conductive agent is a composition in which the conductive carbon black (super-P) and the conductive carbon fibers are mixed in a mass ratio of 1:1.

The mass percentage of the conductive agent in the positive electrode 1 is 0.05% to 10%, and as an example, the mass percentage of the conductive agent in the positive electrode may be 0.05%, 1%, 5%, 8%, or 10%, etc.

With reference to FIG. 2, in some embodiments, the electrolyte layer 1 includes the halides in the solid-state electrolyte. The halides may all be halides that have not been subjected to secondary treatment (second halides), may all be the first halides with a median particle diameter of 50 nm to 3 µm, or may be a combination of the first halides and the second halides. Preferably, the electrolyte layer 2 at least partially includes the first halides. Since the particle diameter of the first halides is small, adding halides with a small diameter to the electrolyte layer 2 may increase the compaction density of the electrolyte layer 2, so that pulverization and cracking of the electrolyte particles are prevented, and the safety performance of the battery is improved. It should be noted that when the electrolyte layer 2 includes both the first halides and the second halides, the mass ratio of the second halides to the first halides is 0:10 to 9:1, for example, 1:1, 3:1, 6:1 or 9:1, etc. When the mass ratio between the two is 0:10, it means that the electrolyte layer 2 does not include the second halides and is entirely formed by the first halides.

In the disclosure, the negative electrode of the lithium-ion battery is generally understood in the art: a negative electrode current collector and a negative electrode active substance layer disposed on the negative electrode current collector. Herein, the negative electrode active substance layer includes a negative electrode active substance. The type of negative electrode active substance may be a graphite material, a silicon material, metallic lithium, metallic indium, a lithium-indium alloy, or a composite material of the graphite material and the silicon material. Herein, examples of the graphite material include natural graphite (lump graphite, flake graphite, and earthy graphite) and artificial graphite (single crystal graphite, polycrystalline graphite, pyrolytic graphite, graphite fibers, etc.). The silicon material includes but not limited to elemental silicon, silicon oxide compounds, etc.

The lithium-ion battery may be assembled into an all-solid-state pouch battery by using methods commonly used in the art by assembling the positive electrode, the electrolyte layer, and a negative electrode sheet prepared above through lamination, packaging, hot pressing, and cold pressing processes.

The disclosure further provides an electronic apparatus including the abovementioned lithium-ion battery. The lithium-ion battery may be used in the electronic apparatus in the form of a single cell, a battery module, or a battery pack.

The electronic apparatus provided by the disclosure includes but not limited to a mobile phone, a tablet, a notebook computer, an electric toy, a battery car, a new energy vehicle, a ship, a spacecraft, etc. Herein, the electric toy may include but not limited to a stationary or mobile electric toy, for example, a game machine, an electric car toy, an electric boat toy, an electric airplane toy, etc. The spacecraft may include but not limited to an airplane, a rocket, a space shuttle, a spaceship, etc. The new energy vehicle may be a pure electric vehicle, a hybrid vehicle, or a range-extended vehicle, etc.

The technical solutions of the disclosure will be described in detail below through several specific examples and comparative examples. A person having ordinary skill in the art should understand that the examples are only to help understand the disclosure and should not be regarded as specific limitations of the disclosure. Unless otherwise stated, the raw materials and reagents used in the following examples are all commercial products, or can be prepared by conventional methods in the art, and the instruments used in the examples are all commercially available.

### Example 1 (not according to the present invention)

The example provides a solid-state electrolyte, and the solid-state electrolyte includes halides Li₂ZrCl₅Br_{0.5}I_{0.5}. Herein, at least part of the halides are first halides with a median particle diameter D50 of 100 nm, and the remaining part is second halides with a median particle diameter of 8 µm.

The preparation process of the halides is provided as follows:

In a dry atmosphere, raw materials LiCl and ZrCl₄ were added into a high-energy ball milling tank according to the stoichiometric ratio, and a precursor was obtained after ball milling. The precursor powder was heat treated and ground into powder to obtain Li₂ZrCl₅Br_{0.5}I_{0.5} halides with a particle diameter of 8 µm. According to the mass ratio of halides: solvent = 1:20, the obtained halides were added to a certain amount of xylene solution, and 1% polyethylene glycol octanol ether was added, mechanically stirred until evenly mixed, and vacuum dried to obtain Li₂ZrCl₅Br_{0.5}I_{0.5} halides with a particle diameter of 100 nm (first halides).

Positive electrode: Li₂ZrCl₅Br_{0.5}I_{0.5} with a mass ratio of 70%, 1% of conductive agent (super-P and VGCF mixed conductive agent with a mass ratio of 1:1), and 29% of Li₂ZrCl₅Br_{0.5}I_{0.5} small-particle halides with a particle diameter of 100 nm were mixed into a uniform positive electrode.

Electrolyte layer: Li₂ZrCl₅Br_{0.5}I_{0.5} halides with 8 µm particle diameter.

Negative electrode: lithium indium alloy is the negative electrode.

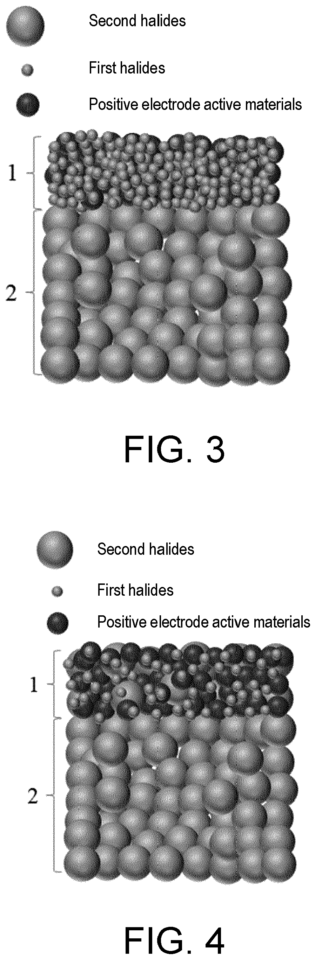

Lithium-ion battery assembly: the positive electrode, the electrolyte layer, and the negative electrode prepared above are assembled into an all-solid-state pouch battery through lamination, packaging, hot pressing, and cold pressing processes. The simplified battery structure is shown in FIG. 3 (with the negative electrode is omitted).

FIG. 3 clearly shows the material compositions of the positive electrode 1 and the electrolyte layer 2 in this example. It can be seen from FIG. 3 that the positive electrode 1 includes the positive electrode active substances and the first halides with a small particle diameter that are uniformly mixed, and the electrolyte layer 2 includes only the second halides with a large particle diameter.

### Example 2

The difference between this example and Example 1 lies in that: the chemical formula of the halides is Li_{2.1}Zr_{0.9}Fe_{0.1}Cl₅Br_{0.5}I_{0.5}.

### Example 3

The difference between this example and Example 1 lies in that: the chemical formula of the halides is Li_{2.2}Zr_{0.8}Fe_{0.2}Cl₅Br_{0.5}I_{0.5}.

### Example 4

The difference between this example and Example 1 lies in that: the chemical formula of the halides is Li_{2.3}Zr_{0.7}Fe_{0.3}Cl₅Br_{0.5}I_{0.5}.

### Example 5

The difference between this example and Example 1 lies in that: the chemical formula of the halides is Li_{2.35}Zr_{0.65}Fe_{0.35}Cl₅Br_{0.5}I_{0.5}.

### Example 6

The difference between this example and Example 1 lies in that: the chemical formula of the halides is Li_{2.4}Zr_{0.6}Fe_{0.4}Cl₅Br_{0.5}I_{0.5}.

### Example 7

The difference between this example and Example 1 lies in that: the chemical formula of the halides is Li_{2.5}Zr_{0.5}Fe_{0.5}Cl₅Br_{0.5}I_{0.5}.

### Example 8

The difference between this example and Example 1 lies in that: the chemical formula of the halides is Li_{2.6}Zr_{0.4}Fe_{0.6}Cl₅Br_{0.5}I_{0.5}.

### Example 9

The difference between this example and Example 5 lies in that: the particle diameter of the first halides is 50 nm.

### Example 10

The difference between this example and Example 5 lies in that: the particle diameter of the first halides is 300 nm.

### Example 11

The difference between this example and Example 5 lies in that: the particle diameter of the first halides is 500 nm.

### Example 12

The difference between this example and Example 5 lies in that: the particle diameter of the first halides is 750 nm.

### Example 13

The difference between this example and Example 5 lies in that: the particle diameter of the first halides is 1 µm.

### Example 14

The difference between this example and Example 5 lies in that: the particle diameter of the first halides is 3 µm.

### Example 15

The difference between this example and Example 5 lies in that: 29% of the halides in the positive electrode 1 is a mixed electrolyte of a Li_{2.35}Zr_{0.65}Fe_{0.35}Cl₅Br_{0.5}I_{0.5} halide electrolyte with a particle diameter of 8 µm and a Li_{2.35}Zr_{0.65}Fe_{0.35}Cl₅Br_{0.5}I_{0.5} small-particle-diameter halide electrolyte with a particle diameter of 100 nm in a mass ratio of 1:1. The remaining steps are the same as in Example 5, and the simplified battery structure is shown in FIG. 4 (with the negative electrode omitted).

FIG. 4 clearly shows the material compositions of the positive electrode 1 and the electrolyte layer 2 in this example. It can be seen from FIG. 4 that the positive electrode 1 includes the positive electrode active substances, the first halides with a small particle diameter, and the second halides with a large particle diameter that are uniformly mixed, and the electrolyte layer 2 includes only the second halides with a large particle diameter.

### Example 16

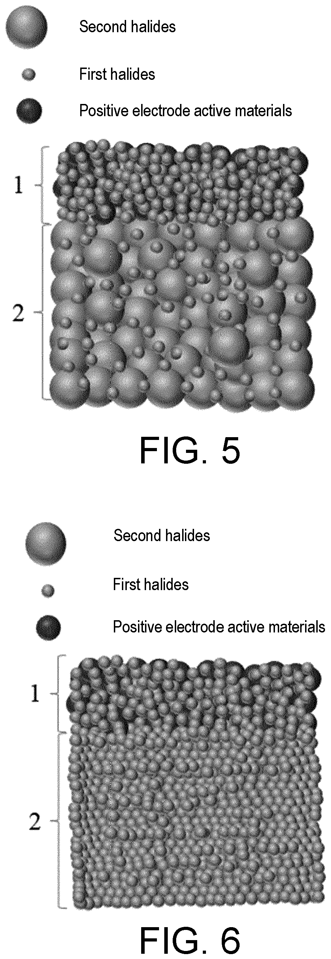

The difference between this example and Example 5 lies in that: the electrolyte layer 2 is a mixed electrolyte of a Li_{2.35}Zr_{0.65}Fe_{0.35}Cl₅Br_{0.5}I_{0.5} halide electrolyte with a particle diameter of 8 µm and a Li_{2.35}Zr_{0.65}Fe_{0.35}Cl₅Br_{0.5}I_{0.5} small-particle-diameter halide electrolyte with a particle diameter of 100 nm in a mass ratio of 1:1. The remaining steps are the same as in Example 5, and the simplified battery structure is shown in FIG. 5 (with the negative electrode omitted).

FIG. 5 clearly shows the material compositions of the positive electrode 1 and the electrolyte layer 2 in this example. It can be seen from FIG. 5 that the positive electrode 1 includes the positive electrode active substances and the first halides with a small particle diameter that are uniformly mixed, and the electrolyte layer 2 includes the first halides with a small particle diameter and the second halides with a large particle diameter.

### Example 17

The difference between this example and Example 5 lies in that: the electrolyte layer 2 is a Li_{2.35}Zr_{0.65}Fe_{0.35}Cl₅Br_{0.5}I_{0.5} small-particle-diameter halide electrolyte with a particle diameter of 100 nm. The remaining steps are the same as in Example 5, and the simplified battery structure is shown in FIG. 6 (with the negative electrode omitted).

FIG. 6 clearly shows the material compositions of the positive electrode 1 and the electrolyte layer 2 in this example. It can be seen from FIG. 6 that the positive electrode 1 includes the positive electrode active substances and the first halides with a small particle diameter that are uniformly mixed, and the electrolyte layer 2 is entirely formed by the first halides with a small particle diameter.

### Example 18

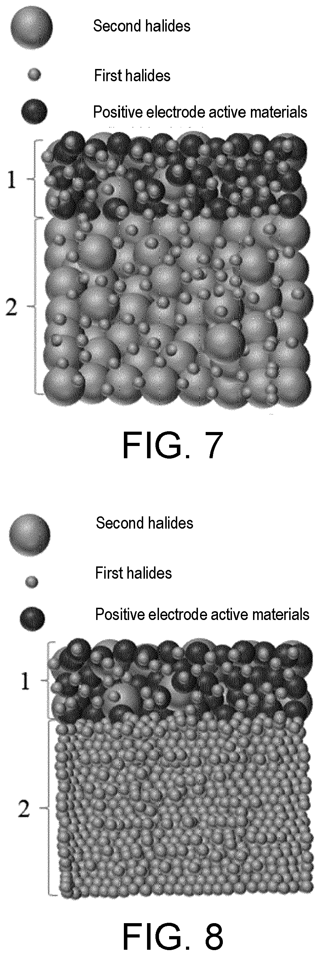

The difference between this example and Example 15 lies in that: the electrolyte layer 2 is a composition of Li_{2.35}Zr_{0.65}Fe_{0.35}Cl₅Br_{0.5}I_{0.5} halides with a particle diameter of 8 µm and Li_{2.35}Zr_{0.65}Fe_{0.35}Cl₅Br_{0.5}I_{0.5} small-particle-diameter halides with a particle diameter of 100 nm in a mass ratio of 1:1. The remaining steps are the same as in Example 15, and the simplified battery structure is shown in FIG. 7 (with the negative electrode omitted).

FIG. 7 clearly shows the material compositions of the positive electrode 1 and the electrolyte layer 2 in this example. It can be seen from FIG. 7 that the positive electrode 1 includes the positive electrode active substances, the first halides with a small particle diameter, the second halides with a large particle diameter that are uniformly mixed, and the electrolyte layer 2 includes the first halides with a small particle diameter and the second halides with a large particle diameter that are uniformly dispersed.

### Example 19

The difference between this example and Example 15 lies in that: the electrolyte layer 2 is Li_{2.35}Zr_{0.65}Fe_{0.35}Cl₅Br_{0.5}I_{0.5} small-particle-diameter halides with a particle diameter of 100 nm. The remaining steps are the same as in Example 15, and the simplified battery structure is shown in FIG. 8 (with the negative electrode omitted).

FIG. 8 clearly shows the material compositions of the positive electrode 1 and the electrolyte layer 2 in this example. It can be seen from FIG. 8 that the positive electrode 1 includes the positive electrode active substances, the first halides with a small particle diameter, and the second halides with a large particle diameter that are uniformly mixed, and the electrolyte layer 2 includes only the first halides with a small particle diameter.

### Comparative Example 1

In a dry atmosphere, the raw materials were added to a high-energy ball mill tank according to the stoichiometric amounts. After ball milling, the precursor powder was heat-treated and ground into powder to obtain a Li_{2.35}Zr_{0.65}Fe_{0.35}Cl₅Br_{0.5}I_{0.5} halide electrolyte with a particle diameter of 8 µm.

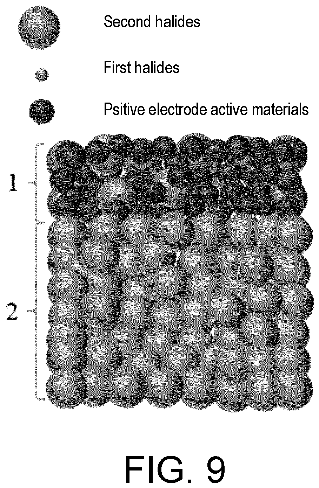

LiNi_{0.8}Co_{0.1}Mn_{0.1}O₂ with a mass ratio of 70%, 1% of conductive agent (super-P and VGCF mixed conductive agent with a mass ratio of 1:1), and 29% of Li_{2.35}Zr_{0.65}Fe_{0.35}Cl₅Br_{0.5}I_{0.5} halide electrolyte with a particle diameter of 8 µm were mixed into a uniform positive electrode. An all-solid-state battery is assembled using the Li_{2.35}Zr_{0.65}Fe_{0.35}Cl₅Br_{0.5}I_{0.5} halide electrolyte with a particle diameter of 8 µm as the electrolyte layer and lithium indium alloy as the negative electrode, and the simplified battery structure is shown in FIG. 9 (with the negative electrode omitted).

FIG. 9 clearly shows the material compositions of the positive electrode 1 and the electrolyte layer 2 in this comparative example. It can be seen from FIG. 9 that the positive electrode 1 includes the positive electrode active substances and the second halides with a large particle diameter that are uniformly mixed, and the electrolyte layer 2 includes only the second halides with a large particle diameter.

### Comparative Example 2

The difference between this comparative example and Example 1 lies in that: the chemical formula of the halides is Li_{2.8}Zr_{0.2}Fe_{0.8}Cl₅Br_{0.5}I_{0.5}.

### Comparative Example 3

The difference between this comparative example and Example 1 lies in that: the chemical formula of the halides is Li_{2.95}Zr_{0.05}Fe_{0.95}Cl₅Br_{0.5}I_{0.5}.

The first halides prepared in the examples and comparative examples were tested for ionic conductivity. The test results are shown in Table 1, and the test methods are as follows:

Ion conductivity: the halide powder was pressed into a sheet with a diameter of 10 mm at 360 MPa, and then stainless steel sheets were used as ion blocking electrodes on both sides of the sheet to make an ion blocking battery. An electrochemical workstation was used for EIS testing, with a frequency range of 106 to 1Hz and an amplitude of 5mV. The formula σ=L/(R*A) is used to calculate the ionic conductivity of an electrolyte membrane, where L is a thickness of the electrolyte membrane, A is an effective area of the electrolyte membrane, and R is body resistance of the electrolyte membrane. A resistance value at the intersection of the EIS diagram curve and the real axis is calculated.

Table 1: Ion conductivity and particle diameter of the first halide electrolyte in each example and comparative example

| Group | Chemical formula | Particle diameter | Ionic conductivity (S cm⁻¹) |
|---|---|---|---|
| Example 1* | Li₂ZrCl₅Br_{0.5}I_{0.5} | 100 nm | 5.23×10⁴ |
| Example 2 | Li_{2.1}Zr_{0.9}Fe_{0.1}Cl₅Br_{0.5}I_{0.5} | 100 nm | 7.87×10⁻⁴ |
| Example 3 | Li_{2.2}Zr_{0.8}Fe_{0.2}Cl₅Br_{0.5}I_{0.5} | 100 nm | 9.32×10⁻⁴ |
| Example 4 | Li_{2.3}Zr_{0.7}Fe_{0.3}Cl₅Br_{0.5}I_{0.5} | 100 nm | 1.23×10⁻³ |
| Example 5 | Li_{2.35}Zr_{0.65}Fe_{0.35}Cl₅Br_{0.5}I_{0.5} | 100 nm | 1.45×10⁻³ |
| Example 6 | Li_{2.4}Zr_{0.6}Fe_{0.4}Cl₅Br_{0.5}I_{0.5} | 100 nm | 9.45×10⁻⁴ |
| Example 7 | Li_{2.5}Zr_{0.5}Fe_{0.5}Cl₅Br_{0.5}I_{0.5} | 100 nm | 6.33×10⁻⁴ |
| Example 8 | Li_{2.6}Zr_{0.4}Fe_{0.6}Cl₅Br_{0.5}I_{0.5} | 100 nm | 4.23×10⁻⁴ |
| Example 9 | Li_{2.35}Zr_{0.65}Fe_{0.35}Cl₅Br_{0.5}I_{0.5} | 50 nm | 1.01×10⁻³ |
| Example 10 | Li_{2.35}Zr_{0.65}Fe_{0.35}Cl₅Br_{0.5}I_{0.5} | 300 nm | 1.49×10⁻³ |
| Example 11 | Li_{2.35}Zr_{0.65}Fe_{0.35}Cl₅Br_{0.5}I_{0.5} | 500 nm | 1.58×10⁻³ |
| Example 12 | Li_{2.35}Zr_{0.65}Fe_{0.35}Cl₅Br_{0.5}I_{0.5} | 750 nm | 1.66×10⁻³ |
| Example 13 | Li_{2.35}Zr_{0.65}Fe_{0.35}Cl₅Br_{0.5}I_{0.5} | 1 µm | 1.72×10⁻³ |
| Example 14 | Li_{2.35}Zr_{0.65}Fe_{0.35}Cl₅Br_{0.5}I_{0.5} | 3 µm | 1.86×10⁻³ |
| Comparative Example 1 | Li_{2.35}Zr_{0.65}Fe_{0.35}Cl₅Br_{0.5}I_{0.5} | 8 µm | 1.91×10⁻³ |
| Comparative Example 2 | Li_{2.8}Zr_{0.2}Fe_{0.8}Cl₅Br_{0.5}I_{0.5} | 100 nm | 1.98×10⁴ |
| Comparative Example 3 | Li_{2.95}Zr_{0.05}Fe_{0.95}Cl₅Br_{0.5}I_{0.5} | 100 nm | 5.43×10⁻⁵ |

| | | | |
|---|---|---|---|
| * Not according to the present invention | | | |

It can be concluded from Table 1 that when the doping amount a of Fe ions in the halides of Examples 1 to 8 ranges from 0 to 0.6, the ion conductivity of the halides reaches 4×10⁻⁴ S cm⁻¹. As the Fe ion doping amount increases, the ion conductivity first gradually increases, and then decreases when it reaches the optimum. When the doping amount a of Fe ions is greater than 0.6 (Comparative Examples 2 and 3), the ion conductivity of the halides decreases significantly, which is much lower than the ion conductivity of the halides of the disclosure.

Comparing Example 5 and Examples 9 to 14 with Comparative Example 1, it can be seen that the ionic conductivity of the same halides increases as the particle diameter increases.

The lithium-ion batteries of the abovementioned examples and comparative examples were subjected to cycle performance tests. The test results are shown in Table 2, and the test methods are as follows:

In an environment of 25°C, the battery prepared above was cyclically charged and discharged, and the number of cycles at room temperature when SOH was 80% was measured and recorded. The working voltage range was 2.8V to 4.35V, and the charge and discharge rate was 1C/1C.

| Group | Number of cycles at room temperature (80% SOH) |
|---|---|
| Example 1 | 296 |
| Example 2 | 303 |
| Example 3 | 353 |
| Example 4 | 389 |
| Example 5 | 410 |
| Example 6 | 393 |
| Example 7 | 342 |
| Example 8 | 289 |
| Example 9 | 421 |
| Example 10 | 373 |
| Example 11 | 358 |
| Example 12 | 327 |
| Example 13 | 312 |
| Example 14 | 287 |
| Example 15 | 403 |
| Example 16 | 396 |
| Example 17 | 385 |
| Example 18 | 393 |
| Example 19 | 387 |
| Comparative Example 1 | 58 |
| Comparative Example 2 | 34 |
| Comparative Example 3 | 19 (short circuit) |

It can be seen from Table 2 that in Examples 1 to 8, as the Fe ion doping amount in the halides increases, the cycle performance of the lithium-ion battery gradually increases first and then gradually decreases. When the doping amount a of Fe ions is greater than 0.6 (Comparative Examples 2 and 3), the cycle performance of the battery is greatly reduced, and even short circuit occurs.

Comparing Example 5 and Examples 9 to 14 to Comparative Example 1, it can be concluded that for the same halides, as the particle diameter increases, the cycle performance of the battery gradually decreases.

Comparing Example 5 and Examples 15 to 19 to Comparative Example 1, it can be concluded that adding at least part of the small-particle-diameter halides to the positive electrode and/or electrolyte layer can significantly improve the cycle performance of the lithium-ion battery.

In the disclosure, the Li₂₊ₐZr₁₋ₐFeₐCl_{6-x-y}BrₓI_{y} halides are subjected to secondary treatment to nanometerize the particle diameter, which greatly reduces the particle diameter of the halide particles and makes them have a larger specific surface area. Completely or partially replacing the original large-particle halide electrolyte with small-particle-diameter halides can increase the contact between the electrolyte and the positive electrode active substance. In this way, the transport effect of lithium ions is enhanced, and performance deterioration caused by poor local contact is avoided. Further, electrolyte pulverization and cracking that occur during battery cycling can be avoided, and the cycle performance and energy density of the battery are thus improved. Therefore, some practical problems in the related art are effectively overcome, so that the disclosure exhibits high utilization value and use significance.

## Claims

1. A solid-state electrolyte, comprising halides represented by the following formula (1), wherein at least part of the halides have a median particle diameter D50 of 50 nm to 3 µm,
Li₂₊ₐZr₁₋ₐMₐCl_{6-x-y}BrₓI_{y} (1)
wherein 0<a≤0.6, 0≤x≤6, 0≤y≤6, x+y≤6, and M is selected from at least one of V, Cr, Mn, Fe, Co, and Ni.

2. The solid-state electrolyte according to claim 1, wherein in formula (1), M is Fe.

3. The solid-state electrolyte according to claim 2, wherein in formula (1), 0.01≤a≤0.5.

4. The solid-state electrolyte according to any one of claims 1 to 3, wherein the D50 is 100 nm to 1 µm.

5. A lithium-ion battery comprising a positive electrode (1), a negative electrode (3), and an electrolyte layer (2), wherein the positive electrode (1) comprises a positive electrode active substance and the solid-state electrolyte according to any one of claims 1 to 4.

6. The lithium-ion battery according to claim 5, wherein the electrolyte layer (2) comprises the halides.

7. The lithium-ion battery according to claim 6, wherein at least part of the halides in the electrolyte layer (2) have a median particle diameter D50 of 50 nm to 3 µm.

8. A battery apparatus, comprising the lithium-ion battery according to any one of claims 4 to 7.

## Amended claims

### Amended claims in accordance with Rule 137(2) EPC.

1. A solid-state electrolyte, comprising halides represented by the following formula (1), wherein the halides include first halides and second halides,
the first halides have a median particle diameter D50 of 50 nm to 3 µm,
the second halides have a median particle diameter D50 greater than 3 µm,
and a mass ratio of the second halides to the first halides is 0:10 to 9:1,
Li₂₊ₐZr₁₋ₐMₐCl_{6-x-y}BrₓI_{y} (1)
wherein 0.1≤a≤0.6, x=0.5, y=0.5, and M is Fe.

2. The solid-state electrolyte according to claim 1, wherein the D50 of the first halides is 100 nm to 1 µm.

3. A lithium-ion battery comprising a positive electrode (1), a negative electrode (3), and an electrolyte layer (2), wherein the positive electrode (1) comprises a positive electrode active substance and the solid-state electrolyte according to claim 1 or 2.

4. The lithium-ion battery according to claim 3, wherein the electrolyte layer (2) comprises the halides in the solid-state electrolyte.

5. The lithium-ion battery according to claim 4, wherein the halides in the electrolyte layer (2) include first halides and second halides,
the first halides in the electrolyte layer (2) have a median particle diameter D50 of 50 nm to 3 µm,
the second halides in the electrolyte layer (2) have a median particle diameter D50 greater than 3 µm,
and a mass ratio of the second halides to the first halides is 0:10 to 9: 1.

6. A battery apparatus, comprising the lithium-ion battery according to any one of claims 3 to 5.
